# EUROPÄISCHE PATENTSCHRIFT

(11) **EP 2 656 584 B1**
(45) Veröffentlichungstag und Bekanntmachung des Hinweises auf die Patenterteilung: **01.03.2017**
(21) Anmeldenummer: 11785339.0
(22) Anmeldetag: 14.11.2011
(51) Int. Cl.: H04L 29/08

(54) **AUSGABE VON VON EINEM ERSTEN EMPFANGSGERÄT UND VON EINEM ZWEITEN EMPFANGSGERÄT EMPFANGENEN NACHRICHTEN**
OUTPUT OF MESSAGES RECEIVED BY A FIRST RECEIVING APPLIANCE AND BY A SECOND RECEIVING APPLIANCE
DIFFUSION DE MESSAGES REÇUS PAR UN PREMIER RÉCEPTEUR ET PAR UN DEUXIÈME RÉCEPTEUR

(30) Priorität: 22.12.2010 DE 102010055858
(43) Veröffentlichungstag der Anmeldung: 30.10.2013
(73) Patentinhaber: Audi AG, 85045 Ingolstadt (DE)
(72) Erfinder: FELBERMEIR, Christian, 86571 Langenmosen (DE); HAAS, Sebastian, 84085 Langquaid (DE)
(74) Vertreter: Brandt, Kai
(86) Internationale Anmeldenummer: PCT/EP2011/005714
(87) Internationale Veröffentlichungsnummer: WO 2012/084096

(56) Entgegenhaltungen:
- WO-A1-01/48985
- DE-A1- 19 640 735
- US-A1- 2003 023 688
- US-A1- 2008 140 408
- US-A1- 2008 266 205
- US-A1- 2010 029 305
- US-A1- 2010 210 315
- US-A1- 2010 248 694

## Beschreibung

Die Erfindung betrifft die Ausgabe von einem ersten Empfangsgerät und/oder von einem zweiten Empfangsgerät empfangenen Nachrichten in einem Kraftfahrzeug.

Kurzmitteilungen (SMS) werden derzeit in Kraftfahrzeugen mittels eines integrierten Kommunikationsmoduls (GSM/UMTS-Modul) oder mittels AT-Kommandos via Bluetooth von einem mobilen Endgerät (Handy) übertragen, angezeigt und/oder versendet.

Bei Nutzung des integrierten Kommunikationsmodules können bereits empfangene Nachrichten nicht angezeigt werden. Die Nutzung von AT-Kommandos ist durch die geringe Verbreitung und Unterstützung seitens der Mobilgeräte sehr eingeschränkt. Ein Empfang und/oder Senden von Emails ist gänzlich unmöglich.

DE 102 00 002 A1 offenbart ein elektronisches interaktives Netzwerkverfahren über eine Verkehrstelekommunikationszentrale.

DE 101 16 246 A1 beschreibt eine kostengünstige Realisierung von Instant-Messaging-Funktionen für Gruppenteilnehmer, deren Endgeräte über einen interaktiven Networkserver INS und ein GSM- oder UMTS-Telekommunikationssystem mit personalisierten Informationen versorgt werden. Dabei werden Gruppennachrichten nach der Konvertierung in eine objektorientierte, plattformunabhängige Beschreibungssprache in Form von Multicast-Informationen über ein separates Interface, welches mit einem DAB/DVB-Playout-Zentrum verbunden ist, ausgegeben. Die Übertragung der Multicast-Informationen zu den mobile Endgeräten oder Gruppenteilnehmern erfolgt über separate DVB-T- oder DAB-Datenkanäle. Die Endgeräte der Gruppenteilnehmer sind zusätzlich mit einem Modul zum Empfang von DAB/DVB-Informationen ausgerüstet und verfügen ebenfalls über eine entsprechende Komponente der oben genannte objektorientierten, plattformunabhängigen Beschreibungssprache. Die Netzwerkfunktionalität ist für die Teilnehmer transparent. Die Teilnehmer kümmern sich nicht darum, auf welchem physikalischen Weg die Dienste die betreffenden Endgeräte erreichen. Den Teilnehmern soll eine adäquate Dienstvielfalt, die vergleichbar mit stationären Diensten in Gebäuden ist, auch in bewegten Objekten, bspw. in Fahrzeugen, angeboten werden.

DE 10 2005 001 759 A1 offenbart eine modulare, mobile Kommunikations-, Datenerfassungs- und Datenverarbeitungseinheit, die die bisher eingesetzte Vielzahl von Endgeräten, wie Notebook, PDA, Mobiltelefon und externe Navigationssysteme insbesondere im Außendienst minimiert und die Datenübergabe bzw. -übermittlung vereinfacht. Die Einheit besteht aus einer Kombination verschiedener Einzelgeräte, einem mobilen Gerät, z.B. einem Personal Digital Assistant (PDA), mit einer Mobiltelefoneinheit und einer Navigationseinheit und ist mit den unterschiedlichsten Kommunikationsschnittstellen, wie UMTS, GPRS, GSM, WLAN, Bluetooth, USB usw. ausgerüstet.

US 2008/0266205 offenbart eine Vorrichtung zum Ausgeben von auf verschiedenen Empfangsgeräten empfangenen Nachrichten in einem Kraftfahrzeug, wobei eine kombinierte Ausgabe der Nachrichten vorgesehen ist.

Davon ausgehend liegt der Erfindung die Aufgabe zugrunde, den Empfang und die Anzeige von Nachrichten für den Fahrer eines Kraftfahrzeuges einfacher und übersichtlicher zu machen, wobei gleichzeitig die Funktionsvielfalt erweitert werden soll.

Diese Aufgabe wird durch die in den unabhängigen Patentansprüchen angegebenen Erfindungen gelöst. Vorteilhafte Ausgestaltungen ergeben sich aus den abhängigen Patentansprüchen und der Beschreibung eines Ausführungsbeispieles.

Demnach werden bei einem Verfahren zur Ausgabe von Nachrichten, die von einem ersten Empfangsgerät und/oder von einem zweiten Empfangsgerät empfangen werden, auf einer Ausgabeeinheit in einem Kraftfahrzeug die von dem ersten Empfangsgerät empfangenen Nachrichten und die von dem zweiten Empfangsgerät empfangenen Nachrichten automatisch kombiniert und gemeinsam ausgegeben. Die verfügbaren Kommunikationskanäle, insbesondere GSM/UMTS-Modul und mobiles Endgerät, werden so kombiniert und bevorzugt durch die Funktionalität des Sendens und Empfangens von Emails ergänzt. Weiter bevorzugt wird die Beschränkung von AT-Kommandos durch die Nutzung neuer Kommunikationsmöglichkeiten wie bspw. Bluetooth und dessen Anwendungsprofile aufgehoben.

Vorzugsweise werden Nachrichten in unterschiedlichen Nachrichtentypen empfangen, wobei vom ersten Empfangsgerät empfangene Nachrichten und vom zweiten Empfangsgerät empfangene Nachrichten des gleichen Nachrichtentyps benachbart ausgegeben werden. Nachrichtentypen sind bspw. SMS, Email, Tweets (Twitter) und Nachrichten von Messanger-Diensten.

Weiter bevorzugt weisen die Empfangsgeräte auch Sendevorrichtungen zum Senden von Nachrichten auf. Insbesondere in diesem Fall wird zu einer Nachricht gespeichert, von welchem Empfangsgerät sie empfangen wurde, und beim Senden einer Antwort zu der Nachricht wird diese automatisch von dem Empfangsgerät gesendet, das die Nachricht empfangen hat.

Bevorzugt werden die Nachrichten auf einer Anzeige ausgegeben. Die Anzeige weist vorzugsweise mehrere Bereiche auf, wobei in einem Bereich jeweils ein Nachrichtentyp ausgegeben wird.

Alternativ kann die Anzeige zwischen mehreren Modi umgeschaltet werden, wobei in jedem Modus jeweils ein anderer Nachrichtentyp von Nachrichten angezeigt wird, die sich aus Nachrichten zusammensetzen, die vom ersten Empfangsgerät empfangen wurden, und Nachrichten, die vom zweiten Empfangsgerät empfangen wurden.

Bevorzugt können die Nachrichten auch akustisch ausgegeben werden. So werden bspw. mit dem ersten Empfangsgerät empfangene Kurzmitteilungen in zeitlicher Nachbarschaft zusammen mit vom zweiten Empfangsgerät empfangenen Kurzmitteilungen ausgegeben.

Als erstes Empfangsgerät wird vorzugsweise ein in das Kraftfahrzeug integriertes Kommunikationsmodul verwendet.

Als zweites Empfangsgerät wird vorzugsweise ein mobiles Endgerät verwendet, das mit der Vorrichtung verbunden oder verbindbar ist.

Eine Vorrichtung mit einer Ausgabeeinheit zum von einem ersten Empfangsgerät empfangenen Nachrichten und von einem zweiten Empfangsgerät empfangenen Nachrichten weist eine Kombinationseinheit zum Vereinen der vom ersten Empfangsgerät empfangenen Nachrichten und der vom zweiten Empfangsgerät empfangenen Nachrichten zu einer gemeinsamen Nachrichtenbasis für eine kombinierte Ausgabe der vom ersten Empfangsgerät empfangenen Nachrichten und der vom zweiten Empfangsgerät empfangenen Nachrichten auf.

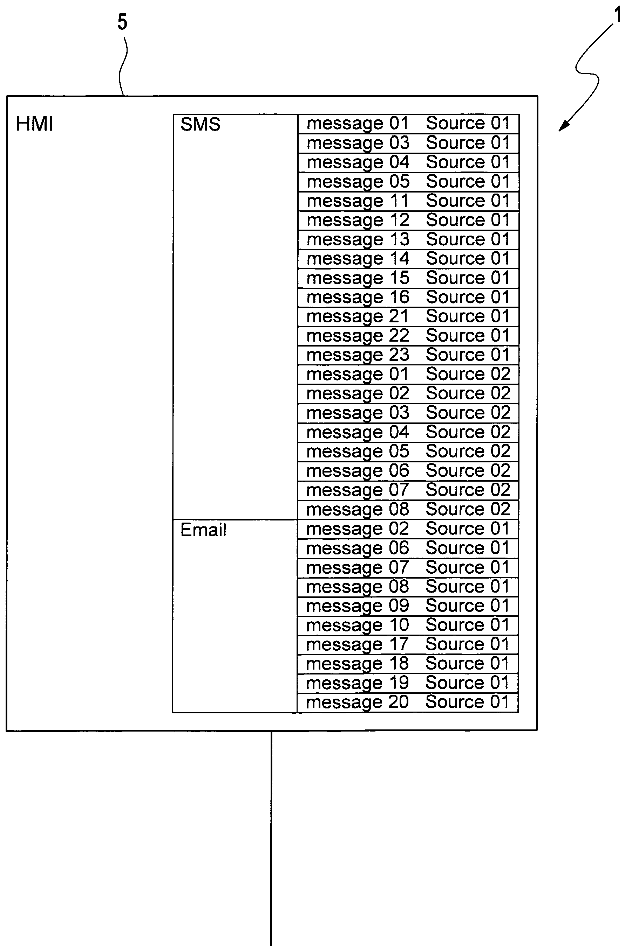

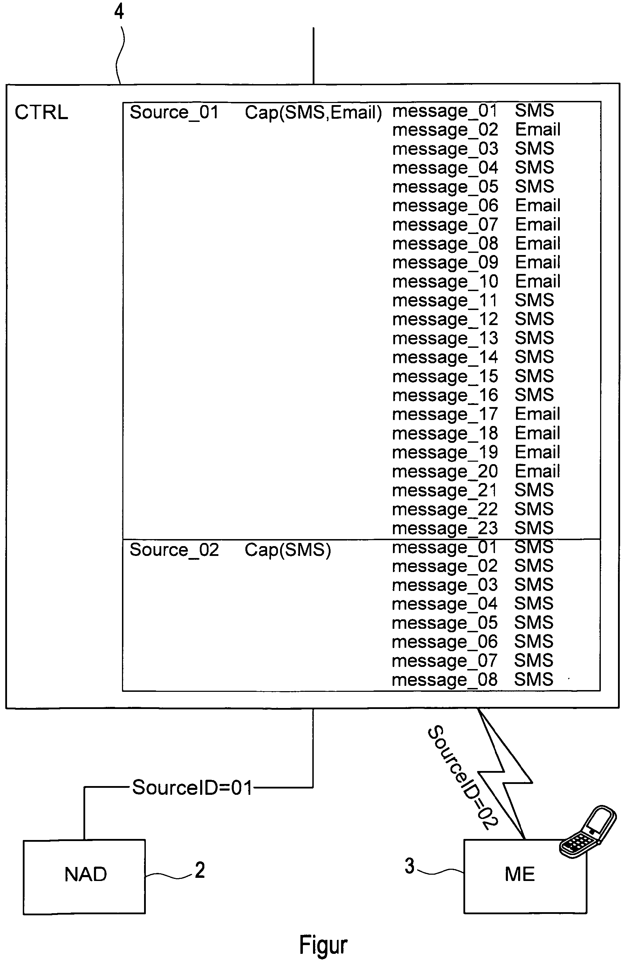

Weitere Merkmale und Vorteile der Erfindung ergeben sich aus der Beschreibung eines Ausführungsbeispiels anhand der Zeichnung. Dabei zeigt die Figur eine Vorrichtung mit einem ersten Empfangsgerät zum Empfangen von Nachrichten und einem zweiten Empfangsgerät zum Empfangen von Nachrichten.

In der Figur erkennt man eine Vorrichtung 1 in Form eines Messaging-Systems eines Kraftfahrzeugs mit einem ersten Empfangsgerät 2 in Form eines fest eingebauten Kommunikationsmoduls und einem zweiten Empfangsgerät 3 in Form eines drahtlosen Kommunikationsmoduls. Die Vorrichtung weist weiterhin eine Kombinationseinheit 4 in Form eines Controllers zum Vereinen der vom ersten Empfangsgerät 2 empfangenen Nachrichten und der vom zweiten Empfangsgerät 3 empfangenen Nachrichten zu einer gemeinsamen Nachrichtenbasis für eine kombinierte Ausgabe auf einem Ausgabegerät 5 in Form eines Human Machine Interfaces (HMI) auf. Dazu werden Signale und Nachrichten des ersten Empfangsgerätes 2 in Form eines Kommunikationsmoduls, insbesondere eines Network Access Devices in der Kombinationseinheit mit den Signalen und Nachrichten fusioniert, welche drahtlos (z.B. via Bluetooth) von einem oder mehreren zweiten Empfangsgeräten in Form von mobilen Endgeräten empfangen werden, und zu einer generellen Nachrichtenbasis vereint.

Dabei wird anhand der vorhandenen Daten entschieden, welche Nachrichtenvarianten (z.B. SMS, Email, Instant Messaging etc.) das erste Empfangsgerät oder das zweite Empfangsgerät unterstützt. Dazu werden Capabilitybits empfangen und verarbeitet, welche über das Network Access Device und ein Message Access Profile, das ein Auslesen von mobilen Endgeräten ermöglicht, gesetzt werden.

Soweit ein bestimmter Nachrichtentyp nicht zur Verfügung steht, wird dieser mit seiner Funktion in der Ausgabeeinheit ausgegraut.

Die einzelnen Empfangspfade von den verschiedenen Empfangsgeräten 2, 3 werden innerhalb der Kombinationseinheit als Quellen virtualisiert (SourceID) und die Nachrichten damit als zusätzliche Information erweitert. In Senderichtung kann mittels Angabe der dedizierten Quelle (SourceID) der explizite Sendeweg ausgewählt werden oder der Controller entscheidet anhand des zu sendenden Nachrichtentyps, welcher Sendeweg genutzt werden soll.

## Patentansprüche

1. Vorrichtung (1) mit einer Ausgabeeinheit (4) zum Ausgeben von von einem ersten Empfangsgerät (2) empfangenen Nachrichten und von einem zweiten Empfangsgerät (3) empfangenen Nachrichten in einem Kraftfahrzeug, wobei die Vorrichtung (1) eine Kombinationseinheit (2) zum Vereinen der vom ersten Empfangsgerät (2) empfangenen Nachrichten und der vom zweiten Empfangsgerät (3) empfangenen Nachrichten zu einer gemeinsamen Nachrichtenbasis für eine kombinierte Ausgabe der vom ersten Empfangsgerät (2) empfangenen Nachrichten und der vom zweiten Empfangsgerät (3) empfangenen Nachrichten auf der Ausgabeeinheit (4) aufweist, wobei die Empfangsgeräte (2, 3) auch Sendevorrichtungen zum Senden von Nachrichten aufweisen und die Vorrichtung ausgebildet ist, zu einer Nachricht zu speichern, von welchem Empfangsgerät (2, 3) sie empfangen wurde, **dadurch gekennzeichnet, dass** das erste Empfangsgerät (2) ein in das Kraftfahrzeug fest eingebautes Kommunikationsmodul ist und dass die Vorrichtung (1) ausgebildet ist, beim Senden einer Antwort zu der Nachricht den Sendeweg dieser Antwort automatisch derart zu wählen, dass diese Antwort von dem Empfangsgerät (2, 3) gesendet wird, das die Nachricht empfangen hat.

2. Vorrichtung nach Anspruch 1, **dadurch gekennzeichnet,**
**dass** die Nachrichten unterschiedliche Nachrichtentypen aufweisen und die Vorrichtung (1) eingerichtet ist, vom ersten Empfangsgerät (2) empfangene Nachrichten und vom zweiten Empfangsgerät (3) empfangene Nachrichten des gleichen Nachrichtentyps benachbart auszugeben.

3. Vorrichtung nach einem der Ansprüche 1 oder 2, **dadurch gekennzeichnet, dass** die Nachrichten auf einer Anzeige ausgebbar sind.

4. Vorrichtung nach den Ansprüchen 2 und 3, **dadurch gekennzeichnet, dass** die Anzeige mehrere Bereiche aufweist und in jeweils einem der Bereiche jeweils ein Nachrichtentyp ausgebbar sind.

5. Vorrichtung nach den Ansprüchen 2 und 3, **dadurch gekennzeichnet, dass** die Anzeige zwischen mehreren Modi umschaltbar ist, wobei in jedem Modus jeweils ein anderer Nachrichtentyp ausgebbar ist.

6. Vorrichtung nach einem der vorhergehenden Ansprüche, **dadurch gekennzeichnet,**
**dass** die Nachrichten akustisch ausgebbar sind.

7. Vorrichtung nach einem der vorhergehenden Ansprüche, **dadurch gekennzeichnet,**
**dass** das zweite Empfangsgerät (3) ein mobiles Endgerät ist.

8. Verfahren zur Ausgabe von Nachrichten, die von einem ersten Empfangsgerät (2) empfangen werden, und Nachrichten, die von einem zweiten Empfangsgerät (3) empfangen werden, auf einer Ausgabeeinheit (4) einer Vorrichtung (1) in einem Kraftfahrzeug,
bei dem die von dem ersten Empfangsgerät (2) empfangenen Nachrichten und die von dem zweiten Empfangsgerät (3) empfangenen Nachrichten kombiniert ausgegeben werden, wobei das erste Empfangsgerät (2) ein in das Kraftfahrzeug fest eingebautes Kommunikationsmodul ist, wobei die Empfangsgeräte (2, 3) auch Sendevorrichtungen zum Senden von Nachrichten aufweisen und zu einer Nachricht gespeichert wird, von welchem Empfangsgerät (2, 3) sie empfangen wurde, und beim Senden einer Antwort zu der Nachricht durch die Vorrichtung der Sendeweg dieser Antwort automatisch derart gewählt wird, dass diese Antwort von dem Empfangsgerät (2, 3) gesendet wird, das die Nachricht empfangen hat.

## Claims

1. Apparatus (1) comprising an output unit (4) to output messages received by a first receiving appliance (2) and messages received by a second receiving appliance (3), wherein the apparatus (1) has a combination unit (2) to combine messages received by the first receiving appliance (2) and messages received by the second receiving appliance (3), to form a common message base for a combined output of the messages received by the first receiving appliance (2) and messages received by the second receiving appliance (3) on the output unit (4), wherein the receiving appliances (2, 3) also have transmitter appliances for transmitting messages and the apparatus is configured to store in a message which receiving appliance (2, 3) has received the message, **characterised in that** the first receiving appliance (2) is a communication module integrated into the motor vehicle and that the apparatus (1) is configured, when transmitting a response to the message, to automatically select the transmission path for the response such that the response is transmitted by the receiving appliance (2, 3) which received the message.

2. Apparatus according to claim 1, **characterised in that** the messages have different message types and the apparatus (1) is set up to contiguously output same type messages received by the first receiving appliance (2) and contiguously output same type messages received by the second receiving appliance (3).

3. Apparatus according to claim 1 or claim 2, **characterised in that** the messages can be displayed on a display.

4. Apparatus according to claims 2 and 3, **characterised in that** the display has a plurality of regions, and each of the regions displays messages of one type.

5. Apparatus according to claims 2 and 3, **characterised in that** the display is switchable between a plurality of different modes, wherein a different message type can be displayed respectively in each mode.

6. Apparatus according to any one of the preceding claims, **characterised in that** the messages can be output acoustically.

7. Apparatus according to any one of the preceding claims, **characterised in that** the second receiving appliance (3) is a mobile terminal.

8. Method for outputting messages, which are received by a first receiving appliance (2), and messages, which are received by a second receiving appliance (3), on an output unit (4) of an apparatus (1) in a motor vehicle,
in which the messages received by the first receiving appliance (2) and the messages received by the second receiving appliance (3) are output in combination, wherein the first receiving appliance (2) is a communication module integrated into the motor vehicle, wherein the receiving appliances (2, 3) also have transmitter appliances for transmitting messages, and a message records which receiving appliance (2, 3) has received the message, and when transmitting a response to the message the appliance automatically selects the transmission path for the response such that the response is transmitted by the receiving device (2, 3) which received the message.

## Revendications

1. Dispositif (1) comportant une unité de sortie (4) servant à délivrer en sortie des messages reçus par un premier appareil récepteur (2) et des messages reçus par un deuxième appareil récepteur (3) dans un véhicule automobile, dans lequel le dispositif (1) présente une unité de combinaison (2) servant à combiner les messages reçus par le premier appareil récepteur (2) et les messages reçus par le deuxième appareil récepteur (3) en une base de messages commune en vue d'une délivrance en sortie combinée des messages reçus par le premier appareil récepteur (2) et des messages reçus par le deuxième appareil récepteur (3) sur l'unité de sortie (4), dans lequel les appareils récepteurs (2, 3) présentent également des dispositifs émetteurs servant à envoyer des messages et le dispositif est réalisé pour mémoriser concernant un message l'appareil récepteur (2, 3) par lequel il a été reçu, **caractérisé en ce que** le premier appareil récepteur (2) est un module de communication installé de manière fixe dans le véhicule automobile, et **en ce que** le dispositif (1) est réalisé pour sélectionner automatiquement, lors de l'envoi d'une réponse au message, le chemin de transmission de cette réponse de telle manière que cette réponse est envoyée par l'appareil récepteur (2, 3) qui a reçu le message.

2. Dispositif selon la revendication 1, **caractérisé en ce**
**que** les messages présentent des types de message différents, et le dispositif (1) est mis au point pour délivrer en sortie de manière contiguë des messages reçus par le premier appareil récepteur (2) ainsi que des messages reçus par le deuxième appareil récepteur (3) du même type de message.

3. Dispositif selon l'une quelconque des revendications 1 ou 2, **caractérisé en ce que** les messages peuvent être délivrés en sortie sur un dispositif d'affichage.

4. Dispositif selon les revendications 2 et 3, **caractérisé en ce que** le dispositif d'affichage présente plusieurs zones, et un type de message respectif peut être délivré en sortie dans respectivement chacune des zones.

5. Dispositif selon les revendications 2 et 3, **caractérisé en ce que** le dispositif d'affichage peut être commuté entre plusieurs modes, dans lequel respectivement un autre type de message peut être délivré en sortie dans chaque mode.

6. Dispositif selon l'une quelconque des revendications précédentes, **caractérisé en ce**
**que** les messages peuvent être délivrés en sortie de manière acoustique.

7. Dispositif selon l'une quelconque des revendications précédentes, **caractérisé en ce**
**que** le deuxième appareil récepteur (3) est un terminal mobile.

8. Procédé servant à délivrer en sortie des messages, qui ont été reçus par un premier appareil récepteur (2), et des messages, qui ont été reçus par un deuxième appareil récepteur (3), sur une unité de sortie (4) d'un dispositif (1) dans un véhicule automobile,
où les messages reçus par le premier appareil récepteur (2) et les messages reçus par le deuxième appareil récepteur (3) sont délivrés en sortie combinés, dans lequel le premier appareil récepteur (2) est un module de communication installé de manière fixe dans le véhicule automobile, dans lequel les appareils récepteurs (2, 3) présentent également des dispositifs émetteurs servant à envoyer des messages et l'appareil récepteur (2, 3) par lequel un message a été reçu est mémorisé concernant ledit message, et lors de l'envoi d'une réponse au message par le dispositif, le chemin de transmission de cette réponse est sélectionné automatiquement de telle manière que cette réponse est envoyée par l'appareil récepteur (2, 3) qui a reçu le message.
